# EUROPEAN PATENT APPLICATION

(11) **EP 4 845 013 A1**
(43) Date of publication of application: **25.11.2026**
(21) Application number: 24918773.3
(22) Date of filing: 15.01.2024
(51) Int. Cl.: H02M 7/48

(54) **POWER CONVERSION DEVICE AND AIR CONDITIONER**

(71) Applicant: Bosch Home Comfort Japan, Inc., Tokyo 105-0022 (JP)
(72) Inventor: SHIMANE, Keito, Tokyo 105-0022 (JP); TSUKII, Koji, Tokyo 105-0022 (JP)
(74) Representative: MERH-IP Matias Erny Reichl Hoffmann Patentanwälte PartG mbB
(86) International application number: PCT/JP2024/000750
(87) International publication number: WO 2025/154125

(57) **Abstract**

A highly reliable power conversion device and the like are provided. A power conversion device (100) includes a converter circuit (10), a smoothing capacitor (20), an inverter circuit (50), an inverter control circuit (61), an overvoltage protection circuit (40), and an overvoltage protection control circuit (62) that performs an overvoltage protection control for switching a switching element (41) to an ON state when a DC voltage of the smoothing capacitor (20) reaches a predetermined value after the inverter circuit (50) is stopped, wherein the inverter control circuit (61) performs a winding short-circuit control for turning one of an upper arm and a lower arm of the inverter circuit (50) to an all-phase ON state while turning the other to an all-phase OFF state after the overvoltage protection control is started, and the winding short-circuit control is started based on a predetermined state quantity having a correlation with an integrated heat generation amount of a resistance element (42) associated with the overvoltage protection control.

## Description

### Technical Field

The present disclosure relates to a power conversion device and the like.

### Background of the Invention

With respect to a power conversion device including an inverter circuit, for example, a technique described in Patent Literature 1 is known. That is, Patent Literature 1 describes a power conversion device provided with an overvoltage protection circuit that has a resistance and a semiconductor element connected in series and protects an inverter circuit from an overvoltage.

### Prior Art Document

### Patent Literature

Patent Literature 1: JP6421882B2

### Summary of the Invention

### Problem to be Solved by the Invention

The overvoltage protection circuit described in Patent Literature 1 has advantages that a circuit configuration is simple and there is a high degree of freedom in setting a resistance value of a resistance element and operating conditions of a switching element. However, regenerative power is generated in a motor immediately after a switching operation of the inverter circuit is stopped, and this regenerative power is consumed by the resistance element of the overvoltage protection circuit (electric energy is converted into thermal energy), so that heat is generated in the resistance element. If the amount of this heat is too large, it may cause a reduction in the life of the resistance element and may also have a thermal influence on peripheral circuit components. Therefore, the technique described in Patent Literature 1 has room for improvement in terms of improving the reliability of the power conversion device.

Accordingly, an object of the present disclosure is to provide a highly reliable power conversion device and the like.

### Means for Solving the Problem

In order to solve the above-mentioned problem, a power conversion device according to the present disclosure includes a converter circuit that converts an AC voltage applied from an AC power source into a DC voltage; a smoothing capacitor that smooths the DC voltage on an output side of the converter circuit; an inverter circuit that converts the DC voltage of the smoothing capacitor into an AC voltage and applies the AC voltage to a motor; an inverter control circuit that controls the inverter circuit; an overvoltage protection circuit having a series connection body of a switching element and a resistance element and being connected in parallel to the smoothing capacitor; and an overvoltage protection control circuit that performs an overvoltage protection control for switching the switching element to an ON state when the DC voltage of the smoothing capacitor reaches a predetermined value after the inverter circuit is stopped, wherein the inverter control circuit performs an winding short-circuit control for turning one of an upper arm and a lower arm of the inverter circuit to an all-phase ON state while turning the other to an all-phase OFF state after the overvoltage protection control is started, and the winding short-circuit control is started based on a predetermined state quantity having a correlation with an integrated heat generation amount of the resistance element associated with the overvoltage protection control.

### Advantageous Effects of the Invention

According to the present disclosure, a highly reliable power conversion device and the like can be provided.

### Brief Description of the Drawings

[FIG. 1] FIG. 1 is a configuration diagram of a power conversion device according to a first embodiment.
[FIG. 2A] FIG. 2A is an explanatory diagram showing an example of a winding short-circuit control in the power conversion device according to the first embodiment.
[FIG. 2B] FIG. 2B is an explanatory diagram showing another example of the winding short-circuit control in the power conversion device according to the first embodiment.
[FIG. 3] FIG. 3 is a flowchart showing processing of a controller of the power conversion device according to the first embodiment.
[FIG. 4] FIG. 4 is a time chart regarding an overvoltage protection control and an winding short-circuit control of the power conversion device according to the first embodiment.
[FIG. 5] FIG. 5 is a flowchart showing processing of a controller of a power conversion device according to a second embodiment.
[FIG. 6] FIG. 6 is a time chart regarding an overvoltage protection control and a winding short-circuit control of the power conversion device according to the second embodiment.
[FIG. 7] FIG. 7 is a flowchart showing processing of a controller of a power conversion device according to a third embodiment.
[FIG. 8] FIG. 8 is a time chart regarding an overvoltage protection control and a winding short-circuit control of the power conversion device according to the third embodiment.
[FIG. 9] FIG. 9 is a configuration diagram of a power conversion device according to a fourth embodiment.
[FIG. 10] FIG. 10 is a flowchart showing processing of a controller of the power conversion device according to the fourth embodiment.
[FIG. 11] FIG. 11 is a time chart regarding an overvoltage protection control and a winding short-circuit control of the power conversion device according to the fourth embodiment.
[FIG. 12] FIG. 12 is a flowchart showing processing of a controller of a power conversion device according to a fifth embodiment.
[FIG. 13] FIG. 13 is a time chart regarding an overvoltage protection control and a winding short-circuit control of the power conversion device according to the fifth embodiment.
[FIG. 14] FIG. 14 is a time chart regarding an overvoltage protection control and a winding short-circuit control of a power conversion device according to a sixth embodiment.
[FIG. 15] FIG. 15 is a configuration diagram of a power conversion device according to a seventh embodiment.
[FIG. 16] FIG. 16 is a configuration diagram of an air conditioner according to an eighth embodiment.

### Embodiments for Carrying Out the Invention

### <<First Embodiment>>

### <Configuration of Power Conversion Device>

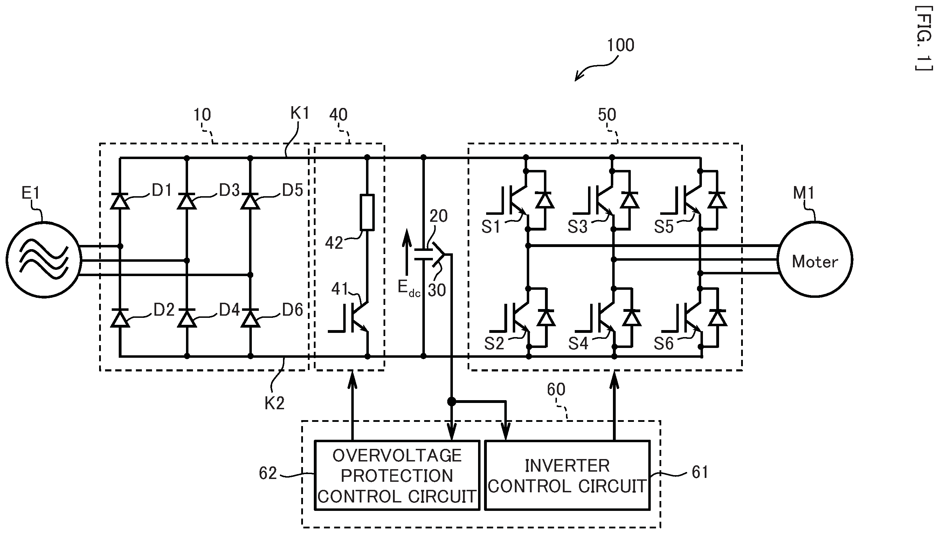

FIG. 1 is a configuration diagram of a power conversion device 100 according to a first embodiment.

The power conversion device 100 shown in FIG. 1 is a device that converts AC power supplied from an AC power source E1 into DC power, and converts this DC power into predetermined AC power to be output to a motor M1. The motor M1 may be, for example, a permanent magnet synchronous motor, or may be another type of motor. As shown in FIG. 1, the power conversion device 100 includes a converter circuit 10, a smoothing capacitor 20, a DC voltage detector 30, an overvoltage protection circuit 40, an inverter circuit 50, an inverter control circuit 61, and an overvoltage protection control circuit 62.

The converter circuit 10 is a power converter that converts an AC voltage applied from a three-phase AC power source E1 into a DC voltage (a pulsating DC voltage). In the example of FIG. 1, a full-wave rectification circuit having a configuration in which six diodes D1 to D6 are bridge-connected is used as the converter circuit 10. Note that a switching-type circuit may be used instead of the converter circuit 10 shown in FIG. 1. An output side of the converter circuit 10 is connected to the inverter circuit 50 via a positive-side DC line K1 and is connected to the inverter circuit 50 via a negative-side DC line K2.

The smoothing capacitor 20 is an element that smooths a DC voltage (a pulsating DC voltage) on the output side of the converter circuit 10, and is connected to a pair of DC lines K1 and K2. Specifically, one end (one lead wire) of the smoothing capacitor 20 is connected to the positive-side DC line K1, and the other end (the other lead wire) is connected to the negative-side DC line K2. For example, a film capacitor is used as such a smoothing capacitor 20.

In general, a film capacitor is smaller in size (volume) than a large-capacity electrolytic capacitor. Therefore, by using a film capacitor as the smoothing capacitor 20, a circuit board (not shown) of the power conversion device 100 can be reduced in size. Further, a film capacitor has a feature of having a longer life than an electrolytic capacitor. Furthermore, since an insulating plastic film is used as a dielectric in a film capacitor, it is not particularly necessary to use an electrolytic solution as in an electrolytic capacitor. Therefore, even when the power conversion device 100 is used in a high-temperature environment, there is almost no possibility of a failure in the film capacitor.

However, when a small-capacity film capacitor is used in consideration of a unit price per electrostatic capacity, a voltage of the film capacitor tends to fluctuate as a storage amount changes. For example, when a regenerative current of the motor M1 flows into the smoothing capacitor 20 as it is immediately after the switching operation of the inverter circuit 50 is stopped, a DC voltage E_{dc} of the smoothing capacitor 20 rises sharply. Therefore, by providing the overvoltage protection circuit 40, the rise in the DC voltage E_{dc} of the smoothing capacitor 20 is suppressed. Note that the type of the smoothing capacitor 20 is not limited to a film capacitor, and may be another type of capacitor such as an electrolytic capacitor.

The DC voltage detector 30 detects the DC voltage E_{dc} across the smoothing capacitor 20. That is, the DC voltage detector 30 detects the DC voltage E_{dc} between the pair of DC lines K1 and K2. For example, the DC voltage E_{dc} across the smoothing capacitor 20 may be divided by a series connection body (not shown) of a plurality of resistance elements, and the DC voltage E_{dc} may be detected based on the voltage division ratio and a voltage of a predetermined resistance element. Moment-to-moment detection values of the DC voltage detector 30 are output to the inverter control circuit 61 and also output to the overvoltage protection control circuit 62.

The overvoltage protection circuit 40 is a circuit for protecting the smoothing capacitor 20 from an overvoltage, and is connected in parallel to the smoothing capacitor 20. As shown in FIG. 1, the overvoltage protection circuit 40 has a series connection body of a switching element 41 and a resistance element 42. This series connection body is connected in parallel to the smoothing capacitor 20. Further, one end of this series connection body is connected to the positive-side DC line K1, and the other end is connected to the negative-side DC line K2.

The switching element 41 is an element for switching between conduction and interruption of a current through the resistance element 42. As such a switching element 41, for example, an IGBT (Insulated Gate Bipolar Transistor) or a MOSFET (Metal-Oxide-Semiconductor Field-Effect Transistor) is used. The resistance element 42 is an element that consumes electric energy associated with a regenerative current of the motor M1 or the like and converts it into thermal energy.

The inverter circuit 50 is a power converter that converts the DC voltage E_{dc} of the smoothing capacitor 20 into a predetermined AC voltage and applies this AC voltage to the motor M1. The inverter circuit 50 has a configuration in which a first leg, a second leg, and a third leg are connected in parallel to the smoothing capacitor 20. The above-mentioned first leg has a configuration in which a pair of switching elements S1 and S2 are connected in series (the same applies to the remaining second leg and third leg). As the switching elements S1 to S6 that are constituent elements of the first leg, second leg, and third leg, for example, IGBTs or MOSFETs are used.

From another point of view, the inverter circuit 50 includes upper arm switching elements S1, S3, and S5 connected to the high-potential side DC line K1, and lower arm switching elements S2, S4, and S6 connected to the low-potential side DC line K2. As shown in FIG. 1, a connection point between the upper arm switching element S1 of the first leg and the lower arm switching element S2 is connected to a U-phase winding (not shown) of the motor M1 via wiring. Similarly, a connection point between the upper arm switching element S3 of the second leg and the lower arm switching element S4 is connected to a V-phase winding (not shown) of the motor M1 via wiring. A connection point between the upper arm switching element S5 of the third leg and the lower arm switching element S6 is connected to a W-phase winding (not shown) of the motor M1 via wiring.

Further, in the inverter circuit 50, in order to prevent destruction of the switching elements S1 to S6 due to commutation, a freewheeling diode (reference numeral not shown) is connected in anti-parallel to each of the switching elements S1 to S6. Note that when the switching elements S1 to S6 have parasitic diodes, these parasitic diodes function as freewheeling diodes, so it is not particularly necessary to separately provide a freewheeling diode.

The inverter control circuit 61 is a circuit that controls the inverter circuit 50 in a predetermined manner based on a detection value of the DC voltage E_{dc} and the like. As such an inverter control circuit 61, for example, an MCU (Micro Controller Unit: microcomputer) is used. Although not shown, the MCU is configured to include electronic circuits such as a CPU (Central Processing Unit), a ROM (Read Only Memory), a RAM (Random Access Memory), and various interfaces, and the CPU reads a program stored in the ROM, develops it in the RAM, and executes various types of processing.

The inverter control circuit 61 switches ON/OFF of the switching elements S1 to S6 in a predetermined manner based on PWM (Pulse Width Modulation) control, thereby converting the DC voltage of the smoothing capacitor 20 into a three-phase AC voltage. This AC voltage is applied to each of the U-phase, V-phase, and W-phase windings of the motor M1.

The overvoltage protection control circuit 62 controls the overvoltage protection circuit 40 in a predetermined manner based on the detection value of the DC voltage E_{dc}. Specifically, the overvoltage protection control circuit 62 switches the switching element 41 to an ON state when the DC voltage E_{dc} of the smoothing capacitor 20 reaches a predetermined value after the inverter circuit 50 is stopped. Such control is called an "overvoltage protection control". Note that as the overvoltage protection control circuit 62, an analog electronic circuit including a comparator (not shown) may be used, or a microcomputer may be used. Further, the inverter control circuit 61 and the overvoltage protection control circuit 62 are collectively referred to as a controller 60.

### <Suppression of DC Voltage>

For example, immediately after the inverter circuit 50 is stopped, a rotor of the motor M1 rotates for a while due to inertia (coasting), so the motor M1 functions as a generator and a regenerative current is generated. When this regenerative current flows into the smoothing capacitor 20 as it is, the DC voltage E_{dc} of the smoothing capacitor 20 rises. Particularly, when a small-capacity film capacitor is used as the smoothing capacitor 20, the DC voltage E_{dc} rises sharply as the storage amount increases. Therefore, in the first embodiment, by providing the overvoltage protection circuit 40, the rise in the DC voltage E_{dc} is suppressed and the smoothing capacitor 20 is protected from an overvoltage.

As another method for suppressing the DC voltage E_{dc}, there is also a method in which one of the upper arm and the lower arm of the inverter circuit 50 is turned all-phase ON while the other is turned all-phase OFF, thereby short-circuiting the three-phase windings of the U-phase, V-phase, and W-phase. Such control is called a "winding short-circuit control". When the winding short-circuit control is performed after the inverter circuit 50 is stopped, a regenerative current circulates through an ON-state switching element of the upper arm or the lower arm of the inverter circuit 50 and the three-phase windings. Therefore, since the regenerative current hardly flows from the three-phase windings of the motor M1 to the smoothing capacitor 20, the rise in the DC voltage E_{dc} can be suppressed.

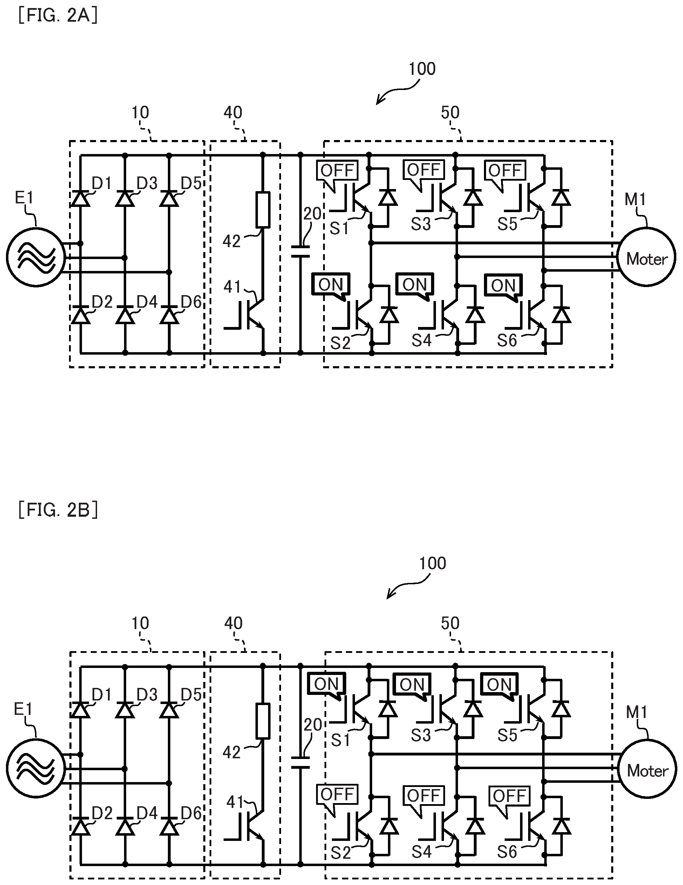

FIG. 2A is an explanatory diagram showing an example of a winding short-circuit control in the power conversion device 100.

In the example of FIG. 2A, as the winding short-circuit control, the inverter control circuit 61 (see FIG. 1) turns the lower arm switching elements S2, S4, and S6 to an ON state while turning the upper arm switching elements S1, S3, and S5 to an OFF state. When the winding short-circuit control is performed while a regenerative current is generated in the motor M1 immediately after the inverter circuit 50 is stopped, the regenerative current circulates through the lower arm switching elements S2, S4, and S6 and the three-phase windings of the motor M1.

FIG. 2B is an explanatory diagram showing another example of the winding short-circuit control in the power conversion device 100.

In the example of FIG. 2B, as the winding short-circuit control, the inverter control circuit 61 (see FIG. 1) turns the upper arm switching elements S1, S3, and S5 to an ON state while turning the lower arm switching elements S2, S4, and S6 to an OFF state. When the winding short-circuit control is performed while a regenerative current is generated in the motor M1 immediately after the inverter circuit 50 is stopped, the regenerative current circulates through the upper arm switching elements S1, S3, and S5 and the three-phase windings of the motor M1.

In the following description (including other embodiments), a case where the lower arm switching elements S2, S4, and S6 are turned to an ON state while the upper arm switching elements S1, S3, and S5 are turned to an OFF state as shown in FIG. 2A will be described as the winding short-circuit control, but control as shown in FIG. 2B may be performed instead.

As described above, by performing the winding short-circuit control (see FIG. 2A and FIG. 2B) after the inverter circuit 50 is stopped, the rise in the DC voltage of the smoothing capacitor 20 can be suppressed. However, if the winding short-circuit control is started simultaneously with the inverter circuit 50 being stopped without particularly performing the overvoltage protection control, an excessive current may flow through the inverter circuit 50 due to energy stored in the three-phase windings of the motor M1 and electromotive force of the motor M1. Further, if the winding short-circuit control is stopped in a state where the rotational speed of the motor M1 is high without particularly performing the overvoltage protection control, the regenerative current of the motor M1 flows into the smoothing capacitor 20, so that the DC voltage E_{dc} rises significantly.

Therefore, in the first embodiment, when the controller 60 stops the inverter circuit 50, the overvoltage protection control is performed for only a predetermined time, and then switching is performed to the winding short-circuit control (see FIG. 2A and FIG. 2B). This can suppress the rise in the DC voltage E_{dc} while suppressing the flow of an excessive current through the inverter circuit 50. Further, by shortening the time during which the regenerative current flows through the resistance element 42 (limiting it to a predetermined time), a heat generation amount of the resistance element 42 can be reduced.

### <Processing of Controller>

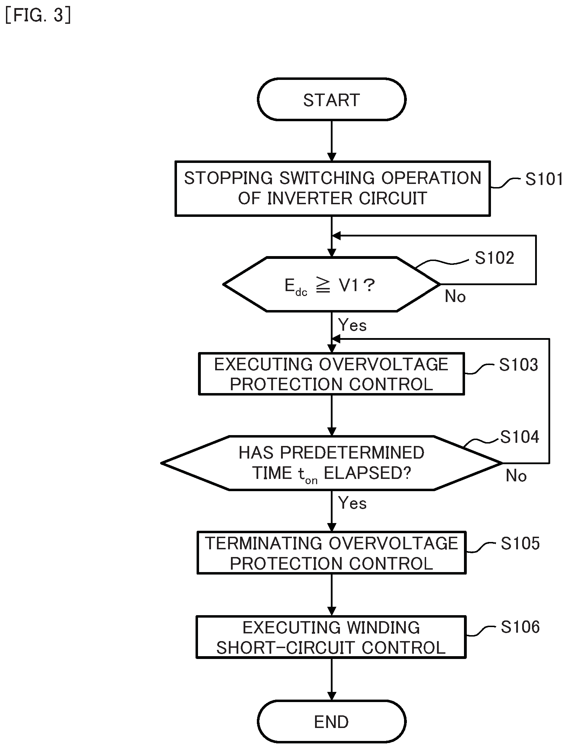

FIG. 3 is a flowchart showing processing of the controller of the power conversion device (see also FIG. 1 as appropriate).

Note that it is assumed that a command to stop the switching operation of the inverter circuit 50 is input at the time of "START" in FIG. 3. For example, when the motor M1 is used as a drive source for a compressor of an air conditioner, the command to stop the switching operation of the inverter circuit 50 is input to the inverter control circuit 61 when a stop button of a remote control (not shown) is pressed.

In step S101 of FIG. 3, the controller 60 causes the inverter control circuit 61 to stop the switching operation of the inverter circuit 50 based on PWM control. Note that for a while even after the switching operation is stopped, the rotor of the motor M1 rotates due to inertia, so the motor M1 functions as a generator. Since this regenerative current flows into the smoothing capacitor 20 via the DC line K1, the DC voltage E_{dc} of the smoothing capacitor 20 rises.

In step S102, the controller 60 determines whether or not the DC voltage E_{dc} of the smoothing capacitor 20 is a predetermined value V1 or more. Here, the predetermined value V1 is a voltage threshold serving as a criterion for determining whether to switch the overvoltage protection circuit 40 to an ON state, and is set in advance.

When the DC voltage E_{dc} of the smoothing capacitor 20 is less than the predetermined value V1 in step S102 (S102: No), the controller 60 repeats the determination process of step S102. When the DC voltage E_{dc} of the smoothing capacitor 20 is the predetermined value V1 or more in step S102 (S102: Yes), the processing of the controller 60 proceeds to step S103.

In step S103, the controller 60 executes (starts) the overvoltage protection control by the overvoltage protection control circuit 62. That is, the controller 60 switches the switching element 41 of the overvoltage protection circuit 40 to an ON state. As a result, the regenerative current of the motor M1 flows through the resistance element 42, so regenerative energy is consumed (converted into thermal energy) in the resistance element 42. As a result, the inflow of the regenerative current into the smoothing capacitor 20 is suppressed, so the rise in the DC voltage E_{dc} of the smoothing capacitor 20 can be suppressed.

Next, in step S104, the controller 60 determines whether or not a predetermined time tₒₙ has elapsed. That is, the controller 60 determines whether or not the elapsed time from the start of the overvoltage protection control has reached the predetermined time tₒₙ. The above-mentioned predetermined time tₒₙ is a time threshold serving as a criterion for determining whether to start the winding short-circuit control, and is set in advance.

Note that as the elapsed time from the start of the overvoltage protection control becomes longer, the time during which the regenerative energy of the motor M1 is consumed as thermal energy by the resistance element 42 becomes longer, and accordingly, the integrated heat generation amount (a value obtained by sequentially taking the sum of heat generation amounts) of the resistance element 42 also becomes larger. Therefore, in the first embodiment, the elapsed time from starting of the overvoltage protection control is used as a "predetermined state quantity" having a correlation with the integrated heat generation amount of the resistance element 42 associated with the overvoltage protection control.

When the elapsed time from the start of the overvoltage protection control has not reached the predetermined time tₒₙ in step S104 (S104: No), the processing of the controller 60 returns to step S103. In this case, the overvoltage protection control is continued. When the elapsed time from the start of the overvoltage protection control has reached the predetermined time tₒₙ in step S104 (S104: Yes), the processing of the controller 60 proceeds to step S105.

In step S105, the controller 60 terminates the overvoltage protection control by the overvoltage protection control circuit 62. That is, the controller 60 switches the switching element 41 of the overvoltage protection circuit 40 to an OFF state. As a result, since the time during which current flows through the resistance element 42 of the overvoltage protection circuit 40 is limited to the predetermined time tₒₙ, the amount of heat generated by the resistance element 42 can be reduced. Therefore, in addition to shortening the life of the resistance element 42, thermal influence on peripheral circuit components can be suppressed.

Next, in step S106, the controller 60 executes the winding short-circuit control by the inverter control circuit 61. Specifically, after the overvoltage protection control is started, the inverter control circuit 61 performs the winding short-circuit control for turning one of the upper arm and the lower arm of the inverter circuit 50 to an all-phase ON state while turning the other to an all-phase OFF state (see FIG. 2A). Thus, in the first embodiment, the winding short-circuit control is started based on the elapsed time (predetermined state quantity) from the start of the overvoltage protection control.

By performing the winding short-circuit control, the regenerative current of the motor M1 circulates through the ON-state switching element of the inverter circuit 50 and the three-phase windings. Further, the regenerative energy of the motor M1 is consumed as work against the rotation resistance of the motor M1. Therefore, during the execution of the winding short-circuit control, regenerative current hardly flows into the smoothing capacitor 20.

After performing the process of step S106, the controller 60 terminates a series of processes (END). Note that a duration time of the winding short-circuit control may be set in advance. This duration time is set, for example, to be longer than a time until rotation of the motor M1 due to inertia stops.

Further, as the rotational speed of the motor M1 is higher, the regenerative current immediately after the inverter circuit 50 is stopped tends to be larger. Therefore, the inverter control circuit 61 makes the predetermined time tₒₙ (threshold of the predetermined state quantity), which is a criterion for determining whether to start the winding short-circuit control, larger as the rotational speed of the motor M1 when the inverter circuit 50 is stopped is higher. This can suppress the flow of an excessive current through the inverter circuit 50 during the winding short-circuit control.

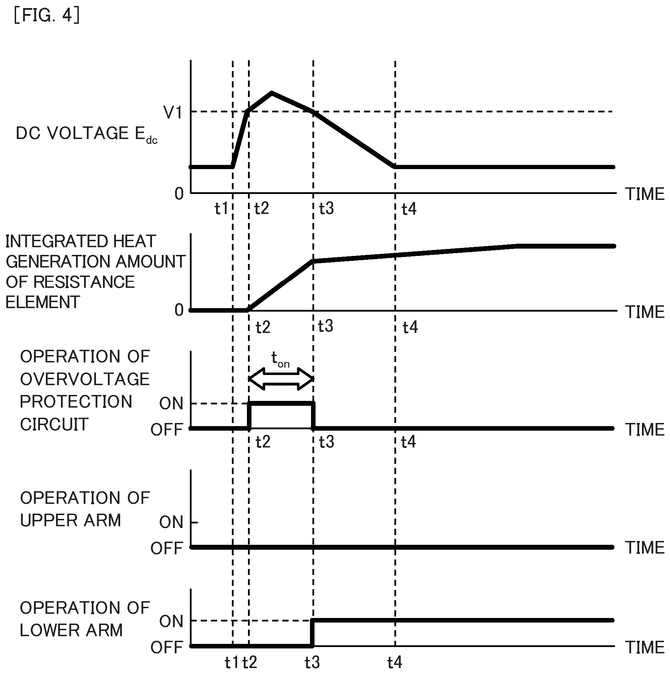

FIG. 4 is a time chart regarding an overvoltage protection control and a winding short-circuit control (see also FIG. 1 as appropriate).

Note that the horizontal axis of each time chart in FIG. 4 is time. Regarding the vertical axis of each time chart in FIG. 4, in order from the top of the paper, it shows the DC voltage E_{dc} of the smoothing capacitor 20, the integrated heat generation amount of the resistance element 42, the operation of the switching element 41 of the overvoltage protection circuit 40, the operation of the upper arm switching elements S1, S3, and S5 of the inverter circuit 50, and the operation of the lower arm switching elements S2, S4, and S6.

In the example of FIG. 4, after the switching operation of the inverter circuit 50 based on PWM control is stopped (S101 in FIG. 3), the voltage of the smoothing capacitor 20 rises sharply from time t1. This is because a regenerative current is generated by an induced voltage of the motor M1, and this regenerative current flows into the smoothing capacitor 20. Then, at time t2, the DC voltage E_{dc} of the smoothing capacitor 20 reaches the predetermined value V1 (S102: Yes). In this case, the overvoltage protection control circuit 62 switches the overvoltage protection circuit 40 to an ON state (S103). As a result, the regenerative current of the motor M1 flows through the resistance element 42, so the rise in the DC voltage E_{dc} can be suppressed.

When the predetermined time tₒₙ has elapsed since the overvoltage protection circuit 40 was switched to the ON state (S104 in FIG. 3: Yes), at time t3, the overvoltage protection control circuit 62 switches the overvoltage protection circuit 40 to an OFF state (S105). As a result, current stops flowing to the overvoltage protection circuit 40, so that heat generation of the resistance element 42 can be suppressed.

In the example of FIG. 4, the winding short-circuit control by the inverter control circuit 61 is started at time t3 when the overvoltage protection circuit 40 is switched to the OFF state (S106 in FIG. 3). Specifically, the inverter control circuit 61 turns the upper arm switching elements S1, S3, and S5 to all-phase OFF while turning the lower arm switching elements S2, S4, and S6 to all-phase ON (see FIG. 2A). As a result, the regenerative current of the motor M1 circulates through the ON-state switching elements S2, S4, and S6 and the three-phase windings. Therefore, during the execution of the winding short-circuit control, regenerative current hardly flows into the smoothing capacitor 20.

By the way, although not shown in FIG. 1, a discharge resistance is connected in parallel to the smoothing capacitor 20, so current flows out from the smoothing capacitor 20 via the discharge resistance during execution of the winding short-circuit control. As a result, the DC voltage E_{dc} of the smoothing capacitor 20 continues to decrease.

### <Effects>

According to the first embodiment, when the DC voltage E_{dc} of the smoothing capacitor 20 reaches the predetermined value V1 after the inverter circuit 50 is stopped, the overvoltage protection control is executed. Therefore, even when a small-capacity film capacitor is used as the smoothing capacitor 20, it is possible to suppress the DC voltage E_{dc} from becoming too high due to the regenerative current of the motor M1. Further, since it is not particularly necessary to provide a detector for detecting a current or the like flowing through the resistance element 42, the manufacturing cost of the power conversion device 100 can be reduced.

Further, since the winding short-circuit control is started when the predetermined time tₒₙ has elapsed from the start of the overvoltage protection control, the amount of heat generated by the resistance element 42 of the overvoltage protection circuit 40 can be reduced. Therefore, since a distance between the resistance element 42 and peripheral circuit components can be shortened at a design stage of the power conversion device 100, restrictions on circuit patterns can be relaxed, and a circuit board can also be reduced in size.

Further, since it is not particularly necessary to start the winding short-circuit control simultaneously with the inverter circuit 50 being stopped, it is possible to suppress an excessive current from flowing through the inverter circuit 50. Therefore, according to the first embodiment, a highly reliable power conversion device 100 can be provided.

### <<Second Embodiment>>

A second embodiment is different from the first embodiment in that the winding short-circuit control is started based on a reduction amount of a DC voltage after the overvoltage protection control is started. Note that others (configuration of power conversion device 100, etc.: see FIG. 1) are the same as those in the first embodiment. Therefore, parts different from those of the first embodiment will be described, and description of overlapping parts will be omitted.

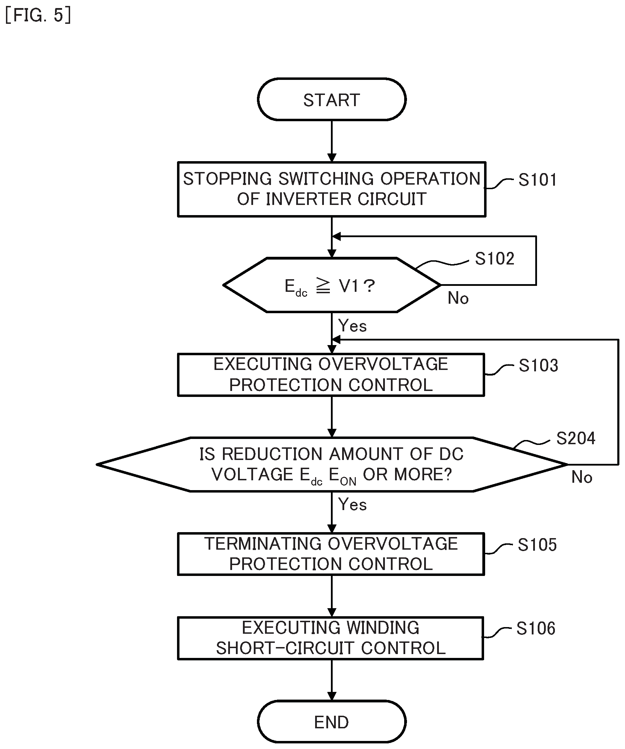

FIG. 5 is a flowchart showing processing of a controller of a power conversion device according to the second embodiment (see also FIG. 1 as appropriate).

Note that steps S101 to S103, S105, and S106 in FIG. 5 are the same as those described in the first embodiment (see FIG. 3). That is, after the switching operation of the inverter circuit 50 is stopped (S101), when the DC voltage E_{dc} becomes the predetermined value V1 or more (S102: Yes), the controller 60 executes the overvoltage protection control (S103).

Next, in step S204, the controller 60 determines whether or not a reduction amount of the DC voltage E_{dc} is a predetermined value E_{ON} or more. That is, the controller 60 determines whether or not a reduction amount from a peak value is the predetermined value E_{ON} or more in a case where a change in the DC voltage E_{dc} changes from an increase to a peak value and turns to a decrease after the overvoltage protection control is started. The above-mentioned predetermined value E_{ON} is a threshold of a voltage reduction amount (absolute value) serving as a criterion for determining whether to start the winding short-circuit control, and is set in advance.

Note that as the reduction amount of the DC voltage E_{dc} when the overvoltage protection control is being executed is larger, the integrated heat generation amount of the resistance element 42 also tends to be larger. Therefore, in the second embodiment, the following state quantity is used as the "predetermined state quantity" having a correlation with the integrated heat generation amount of the resistance element 42 associated with the overvoltage protection control. That is, a reduction amount from a peak value in a case where a change in the DC voltage E_{dc} changes from an increase to a peak value and turns to a decrease after the overvoltage protection control is started is used as the "predetermined state quantity".

When the reduction amount of the DC voltage E_{dc} is less than the predetermined value E_{ON} in step S204 (S204: No), the processing of the controller 60 returns to step S103. In this case, the overvoltage protection control is continued. When the reduction amount of the DC voltage E_{dc} is the predetermined value E_{ON} or more in step S204 (S204: Yes), the processing of the controller 60 proceeds to step S105. Then, the controller 60 ends the overvoltage protection control (S105) and executes the winding short-circuit control (S106). In this way, the winding short-circuit control is started based on the reduction amount (predetermined state quantity) of the DC voltage E_{dc} after the overvoltage protection control is started.

Note that the inverter control circuit 61 preferably makes the predetermined value E_{ON} (threshold of the predetermined state quantity), which is a criterion for determining whether to start the winding short-circuit control, larger as the rotational speed of the motor M1 when the inverter circuit 50 is stopped is higher. This can suppress the flow of an excessive current through the inverter circuit 50.

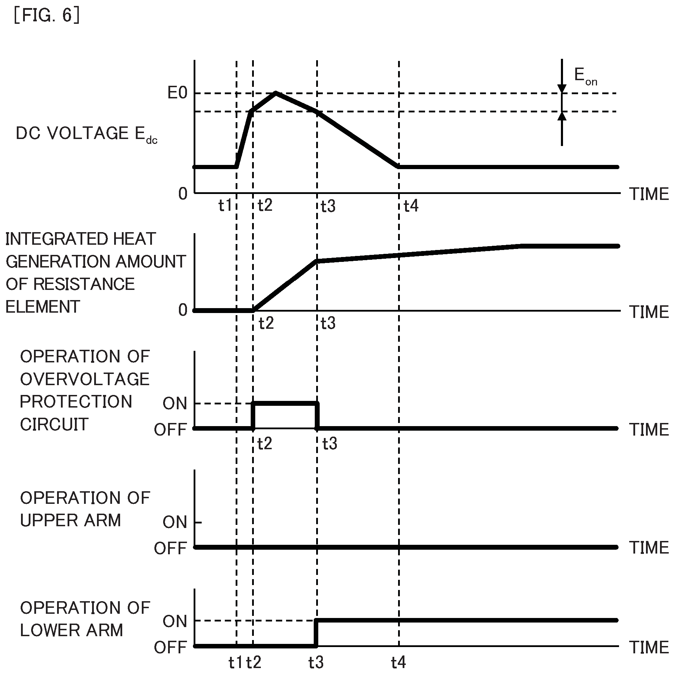

FIG. 6 is a time chart regarding an overvoltage protection control and a winding short-circuit control (see FIG. 1 as appropriate).

Note that the horizontal axis and vertical axis of each time chart in FIG. 6 are the same as those in FIG. 4, so description thereof will be omitted. In the example of FIG. 6, a reduction amount from a peak value E0 when a change in the DC voltage E_{dc} changes from an increase to the peak value E0 and turns to a decrease reaches the predetermined value E_{ON} at time t3 (S204 in FIG. 5: Yes). In this case, the controller 60 ends the overvoltage protection control (S105) and executes the winding short-circuit control (S106). As a result, current stops flowing to the overvoltage protection circuit 40, so that the integrated heat generation amount of the resistance element 42 can be reduced while suppressing a rise in the DC voltage E_{dc}.

### <Effects>

According to the second embodiment, the winding short-circuit control is started when the reduction amount of the DC voltage E_{dc} reaches the predetermined value E_{ON}. Further, since the reduction amount of the DC voltage E_{dc} tends to be larger as the heat generation amount of the resistance element 42 is larger, the winding short-circuit control can be started at an appropriate timing.

### <<Third Embodiment>>

A third embodiment is different from the first embodiment in that the winding short-circuit control is started based on an integrated value of a reduction amount of a DC voltage after the overvoltage protection control is started. Note that others (configuration of power conversion device 100, etc.: see FIG. 1) are the same as those in the first embodiment. Therefore, parts different from those of the first embodiment will be described, and description of overlapping parts will be omitted.

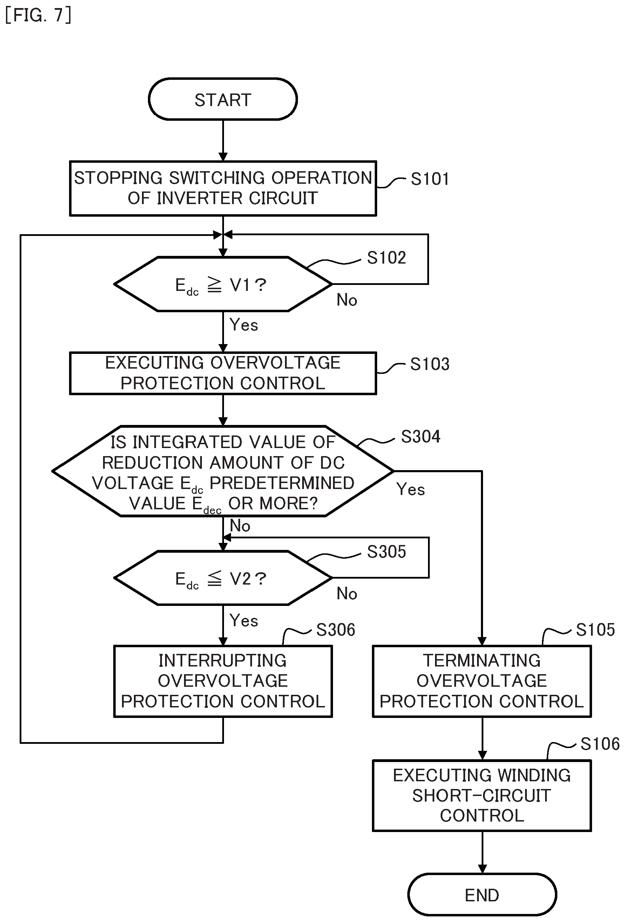

FIG. 7 is a flowchart showing processing of a controller of a power conversion device according to the third embodiment (see also FIG. 1 as appropriate).

Note that steps S101 to S103, S105, and S106 in FIG. 7 are the same as those described in the first embodiment (see FIG. 3). That is, after the switching operation of the inverter circuit 50 is stopped (S101), when the DC voltage E_{dc} becomes the predetermined value V1 or more (S102: Yes), the controller 60 executes the overvoltage protection control (S103).

Next, in step S304, the controller 60 determines whether or not an integrated value (a value obtained by sequentially taking a sum) of the reduction amount of the DC voltage E_{dc} is a predetermined value E_{dec} or more. That is, the controller 60 determines whether or not an integrated value of a reduction amount from a peak value is the predetermined value E_{dec} or more in a case where a change in the DC voltage E_{dc} changes from an increase to a peak value and turns to a decrease after the overvoltage protection control is started. The above-mentioned predetermined value E_{dec} is a threshold of an integrated value of a voltage reduction amount (absolute value) serving as a criterion for determining whether to start the winding short-circuit control, and is set in advance.

Note that as the integrated value of the reduction amount of the DC voltage E_{dc} during execution of the overvoltage protection control is larger, the integrated heat generation amount of the resistance element 42 also tends to be larger. Therefore, in the third embodiment, the following state quantity is used as the "predetermined state quantity" having a correlation with the integrated heat generation amount of the resistance element 42 associated with the overvoltage protection control. That is, an integrated value of a reduction amount from a peak value in a case where a change in the DC voltage E_{dc} changes from an increase to a peak value and turns to a decrease after the overvoltage protection control is started is used as the "predetermined state quantity".

When the integrated value of the reduction amount of the DC voltage E_{dc} is less than the predetermined value E_{dec} in step S304 (S304: No), the processing of the controller 60 proceeds to step S305.

In step S305, the controller 60 determines whether or not the DC voltage E_{dc} is a predetermined value V2 or less. Note that the predetermined value V2 is a voltage threshold serving as a criterion for determining whether to interrupt the overvoltage protection control, and is set in advance as a value lower than the above-mentioned predetermined value V1.

When the DC voltage E_{dc} is higher than the predetermined value V2 in step S305 (S305: No), the controller 60 repeats the determination process of step S305. When the DC voltage E_{dc} is the predetermined value V2 or less in step S305 (S305: Yes), the processing of the controller 60 returns to step S102. In this way, the controller 60 alternately switches ON (S103) and OFF (S306) of the overvoltage protection circuit 40 based on the DC voltage E_{dc}.

When the integrated value of the reduction amount of the DC voltage E_{dc} is the predetermined value E_{dec} or more in step S304 (S304: Yes), the processing of the controller 60 proceeds to step S105. In this case, since a predetermined amount of regenerative energy has already been consumed in the resistance element 42, there is no particular possibility that an excessive current flows through the inverter circuit 50 even if the winding short-circuit control is started.

Then, the controller 60 ends the overvoltage protection control (S105) and executes the winding short-circuit control (S106). In this way, in the third embodiment, the inverter control circuit 61 starts the winding short-circuit control based on the integrated value of the reduction amount of the DC voltage E_{dc} after the overvoltage protection control is stopped. Note that the integrated value of the reduction amount of the DC voltage E_{dc} may be reset at the start of the winding short-circuit control.

Note that the flowchart shown in FIG. 7 is an example and is not limited thereto. For example, while the controller 60 alternately repeats ON/OFF of the overvoltage protection circuit 40 based on a comparison result between the DC voltage E_{dc} and the predetermined values V1 and V2, comparison between the integrated value of the reduction amount of the DC voltage E_{dc} and the predetermined value E_{dec} may be repeated in parallel therewith. Then, when the integrated value of the reduction amount of the DC voltage E_{dc} becomes the predetermined value E_{dec} or more, the controller 60 may execute the processing of steps S105 and S106 as an interrupt process. Similar effects can be achieved by such processing.

Note that the inverter control circuit 61 preferably makes the predetermined value E_{dec} (threshold of the predetermined state quantity), which is a criterion for determining whether to start the winding short-circuit control, larger as the rotational speed of the motor M1 when the inverter circuit 50 is stopped is higher. This can suppress the flow of an excessive current through the inverter circuit 50.

Even if the DC voltage E_{dc} reaches the predetermined value V1 again during execution of the winding short-circuit control (that is, even if a starting condition for the overvoltage protection control is satisfied again), the controller 60 may be configured not to start the overvoltage protection control. This can suppress an increase in the integrated heat generation amount of the resistance element 42.

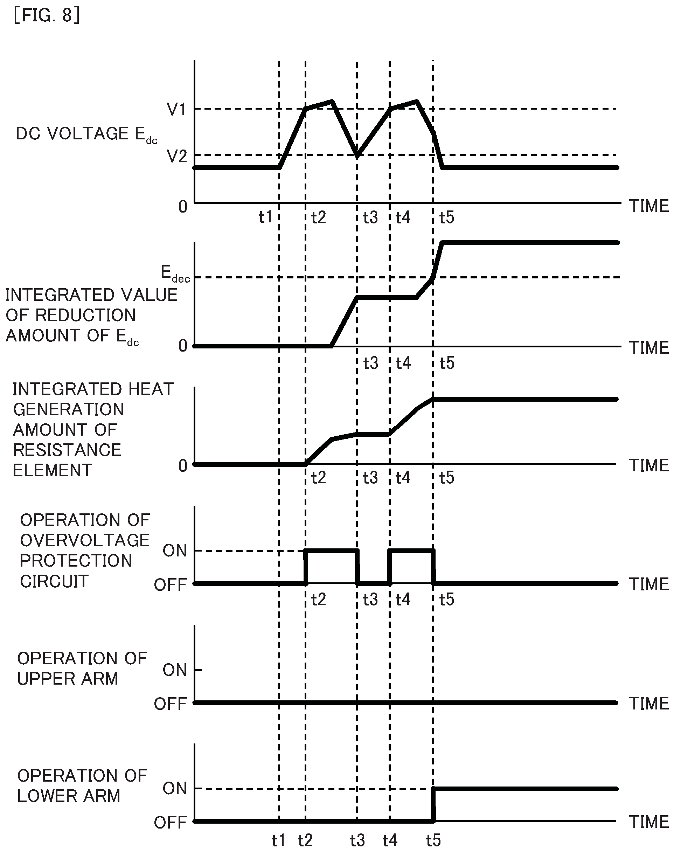

FIG. 8 is a time chart regarding an overvoltage protection control and a winding short-circuit control (see also FIG. 1 as appropriate).

Note that the vertical axis of the second time chart from the top of FIG. 8 is the integrated value of the reduction amount of the DC voltage E_{dc}. Regarding the vertical axis of the remaining time charts of FIG. 8, they are the same as those in FIG. 4, so description thereof will be omitted.

In the example of FIG. 8, as the inverter circuit 50 is stopped, the DC voltage E_{dc} reaches the predetermined value V1 at time t2 (S102 in FIG. 7: Yes), so the overvoltage protection circuit 40 is switched to an ON state (S103). At subsequent time t3, since the DC voltage E_{dc} has decreased to the predetermined value V2 (S305: Yes), the overvoltage protection circuit 40 is temporarily switched to an OFF state (S306). Note that at the point of time t3, since the integrated value of the reduction amount of the DC voltage E_{dc} has not reached the predetermined value E_{dec} (S304: No), the winding short-circuit control has not been started yet.

After time t3 in FIG. 8, the DC voltage E_{dc} rises again due to regenerative energy of the motor M1, and since the DC voltage E_{dc} reaches the predetermined value V1 at time t4 (S102 in FIG. 7: Yes), the overvoltage protection circuit 40 is switched to the ON state again (S103). At subsequent time t5, since the integrated value of the reduction amount of the DC voltage E_{dc} has reached the predetermined value E_{dec} (S304: Yes), the controller 60 switches the overvoltage protection circuit 40 to the OFF state (S105) and starts the winding short-circuit control (S106).

### <Effects>

According to the third embodiment, the winding short-circuit control is started at a timing when the integrated value of the reduction amount of the DC voltage E_{dc} reaches the predetermined value E_{dec}. Here, as the integrated value of the reduction amount of the DC voltage E_{dc} is larger, the integrated heat generation amount of the resistance element 42 tends to be larger, and regenerative energy that has not been consumed tends to be smaller. Therefore, according to the third embodiment, the winding short-circuit control can be started at an even more appropriate timing than in the second embodiment.

### <<Fourth Embodiment>>

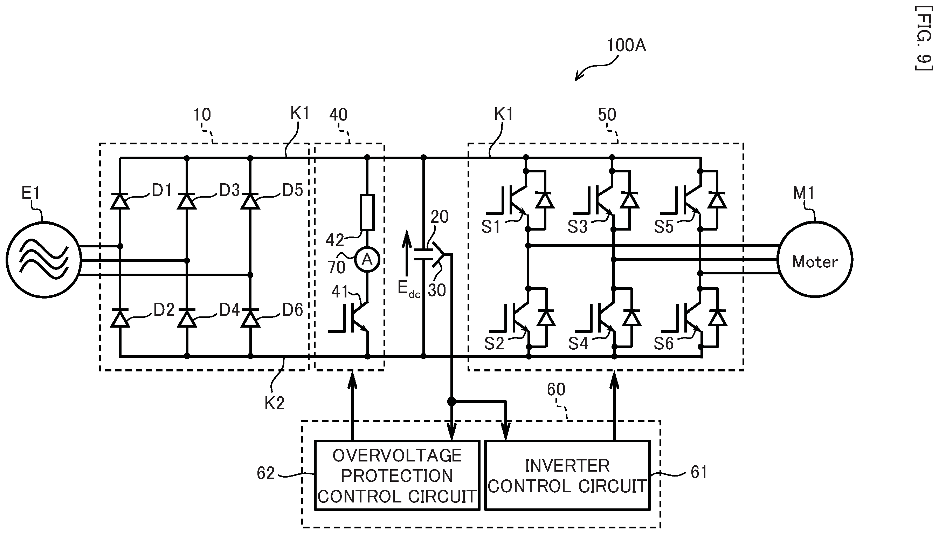

A fourth embodiment is different from the first embodiment in that a power conversion device 100A (see FIG. 9) is provided with a current detector 70 (see FIG. 9). Further, the fourth embodiment is different from the first embodiment in that the winding short-circuit control is started when a detection value of the current detector 70 reaches a predetermined value. Note that others are the same as those in the first embodiment. Therefore, parts different from those of the first embodiment will be described, and description of overlapping parts will be omitted.

FIG. 9 is a configuration diagram of a power conversion device 100A according to the fourth embodiment.

The power conversion device 100A shown in FIG. 9 is provided with a current detector 70 in addition to each configuration described in the first embodiment (see FIG. 1). The current detector 70 detects a current flowing through the resistance element 42, and is connected in series to the resistance element 42 and the switching element 41. As such a current detector 70, for example, a shunt resistance or a current sensor is used. Moment-to-moment detection values of the current detector 70 are output to the controller 60.

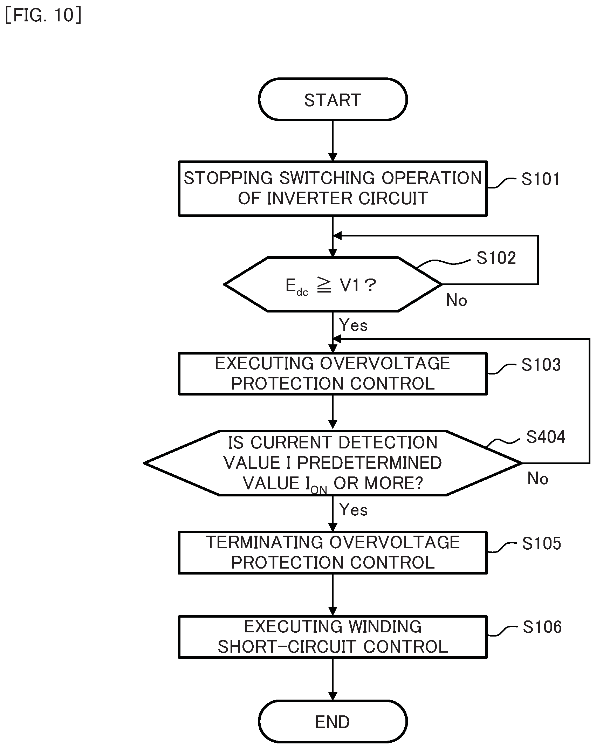

FIG. 10 is a flowchart showing processing of a controller of the power conversion device (see also FIG. 9 as appropriate).

Note that steps S101 to S103, S105, and S106 in FIG. 10 are the same as those described in the first embodiment (see FIG. 3). That is, after the switching operation of the inverter circuit 50 is stopped (S101), when the DC voltage E_{dc} is the predetermined value V1 or more (S102: Yes), the controller 60 executes the overvoltage protection control (S103).

Next, in step S404, the controller 60 determines whether or not a current detection value I (detection value of the current detector 70) is a predetermined value I_{ON} or more. That is, the controller 60 determines whether or not the magnitude of the current flowing through the resistance element 42 after the overvoltage protection control is started has become the predetermined value I_{ON} or more. The above-mentioned predetermined value I_{ON} is a threshold of a current serving as a criterion for determining whether to start the winding short-circuit control, and is set in advance.

Note that as the current flowing through the resistance element 42 when the overvoltage protection control is being executed is larger, the integrated heat generation amount of the resistance element 42 also tends to be larger. Therefore, in the fourth embodiment, the magnitude of the current flowing through the resistance element 42 after the overvoltage protection control is started is used as the "predetermined state quantity" having a correlation with the integrated heat generation amount of the resistance element 42 associated with the overvoltage protection control.

When the current detection value I is less than the predetermined value I_{ON} in step S404 (S404: No), the processing of the controller 60 returns to step S103. In this case, the overvoltage protection control is continued. When the current detection value I is the predetermined value I_{ON} or more in step S404 (S404: Yes), the processing of the controller 60 proceeds to step S105. Then, the controller 60 ends the overvoltage protection control (S105) and executes the winding short-circuit control (S106). In this way, the winding short-circuit control is started based on the magnitude (predetermined state quantity) of the current flowing through the resistance element 42 after the overvoltage protection control is started.

Note that the inverter control circuit 61 preferably makes the predetermined value I_{ON} (threshold of the predetermined state quantity), which is a criterion for determining whether to start the winding short-circuit control, larger as the rotational speed of the motor M1 when the inverter circuit 50 is stopped is higher. This can suppress the flow of an excessive current through the inverter circuit 50.

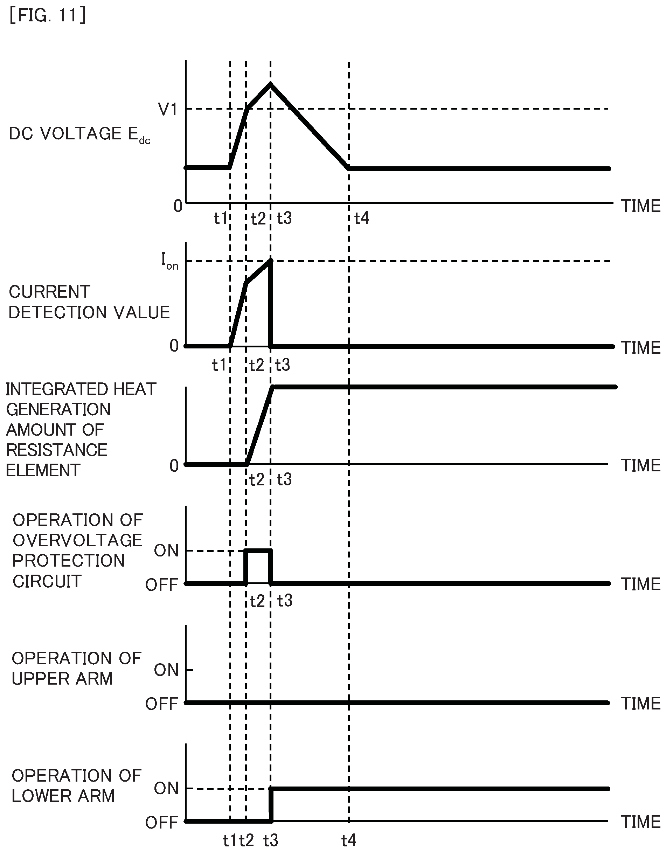

FIG. 11 is a time chart regarding an overvoltage protection control and a winding short-circuit control of the power conversion device (see also FIG. 9 as appropriate).

Note that the vertical axis of the second time chart from the top of FIG. 11 is the current detection value in the current detector 70. Regarding the vertical axis of the remaining time charts of FIG. 11, they are the same as those in FIG. 4, so description thereof will be omitted.

In the example of FIG. 11, the current detection value by the current detector 70 reaches the predetermined value I_{ON} at time t3 (S404 in FIG. 10: Yes). In this case, the overvoltage protection control circuit 62 switches the overvoltage protection circuit 40 to an OFF state (S105). As a result, current stops flowing to the overvoltage protection circuit 40, so that heat generation of the resistance element 42 can be suppressed. In the example of FIG. 10, the winding short-circuit control is started at time t3 when the overvoltage protection circuit 40 is switched to the OFF state (S106). This can consume regenerative energy of the motor M1 while suppressing a rise in the DC voltage E_{dc}.

### <Effects>

According to the fourth embodiment, the winding short-circuit control is started when the detection value of the current flowing through the resistance element 42 reaches the predetermined value I_{ON}. Further, since the heat generation amount of the resistance element 42 also tends to be larger as the current flowing through the resistance element 42 is larger, the winding short-circuit control can be started at an appropriate timing.

### <<Fifth Embodiment>>

A fifth embodiment is different from the fourth embodiment in that the winding short-circuit control is started based on an integrated value of a current flowing through a resistance element 42 (see FIG. 9). Note that others (configuration of power conversion device 100A, etc.: see FIG. 9) are the same as those in the fourth embodiment. Therefore, parts different from those of the fourth embodiment will be described, and description of overlapping parts will be omitted.

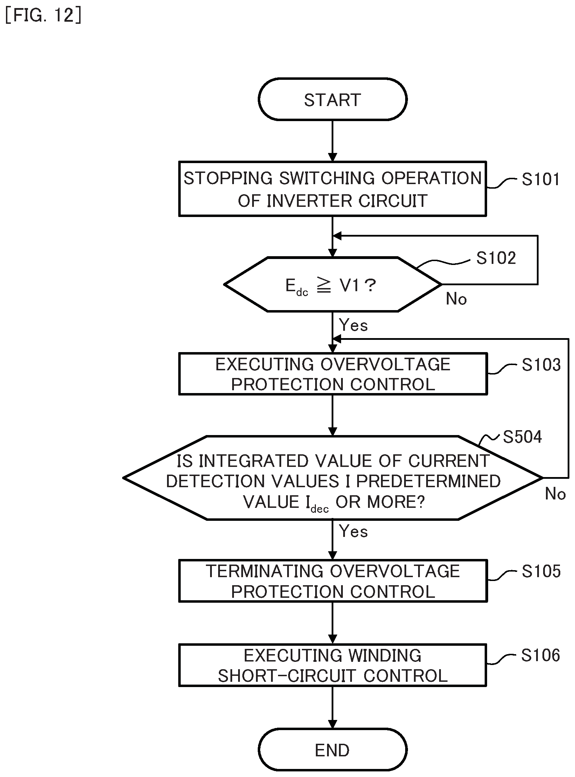

FIG. 12 is a flowchart showing processing of a controller of a power conversion device according to the fifth embodiment (see also FIG. 9 as appropriate).

Note that steps S101 to S103, S105, and S106 in FIG. 12 are the same as those described in the first embodiment (see FIG. 3). That is, after the switching operation of the inverter circuit 50 is stopped (S101), when the DC voltage E_{dc} is the predetermined value V1 or more (S102: Yes), the controller 60 executes the overvoltage protection control (S103).

Next, in step S504, the controller 60 determines whether or not an integrated value of current detection values I (a value obtained by sequentially taking a sum) is a predetermined value I_{dec} or more. That is, the controller 60 determines whether or not an integrated value of the current flowing through the resistance element 42 after the overvoltage protection control is started is the predetermined value I_{dec} or more. The above-mentioned predetermined value I_{dec} is a threshold of a current integrated value serving as a criterion for determining whether to start the winding short-circuit control, and is set in advance.

Note that as the integrated value of the current flowing through the resistance element 42 when the overvoltage protection control is being executed is larger, the integrated heat generation amount of the resistance element 42 also tends to be larger. Therefore, in the fifth embodiment, the integrated value of the current flowing through the resistance element 42 after the overvoltage protection control is started is used as the "predetermined state quantity" having a correlation with the integrated heat generation amount of the resistance element 42 associated with the overvoltage protection control.

After performing the process of step S504, the controller 60 ends the overvoltage protection control (S105) and executes the winding short-circuit control (S106). In this way, the winding short-circuit control is started based on the integrated value (predetermined state quantity) of the current flowing through the resistance element 42 after the overvoltage protection control is started. Note that the integrated value of the current flowing through the resistance element 42 may be reset at the start of the winding short-circuit control.

Note that the inverter control circuit 61 preferably makes the predetermined value I_{dec} (threshold of the predetermined state quantity), which is a criterion for determining whether to start the winding short-circuit control, larger as the rotational speed of the motor M1 when the inverter circuit 50 is stopped is higher. This can suppress the flow of an excessive current through the inverter circuit 50.

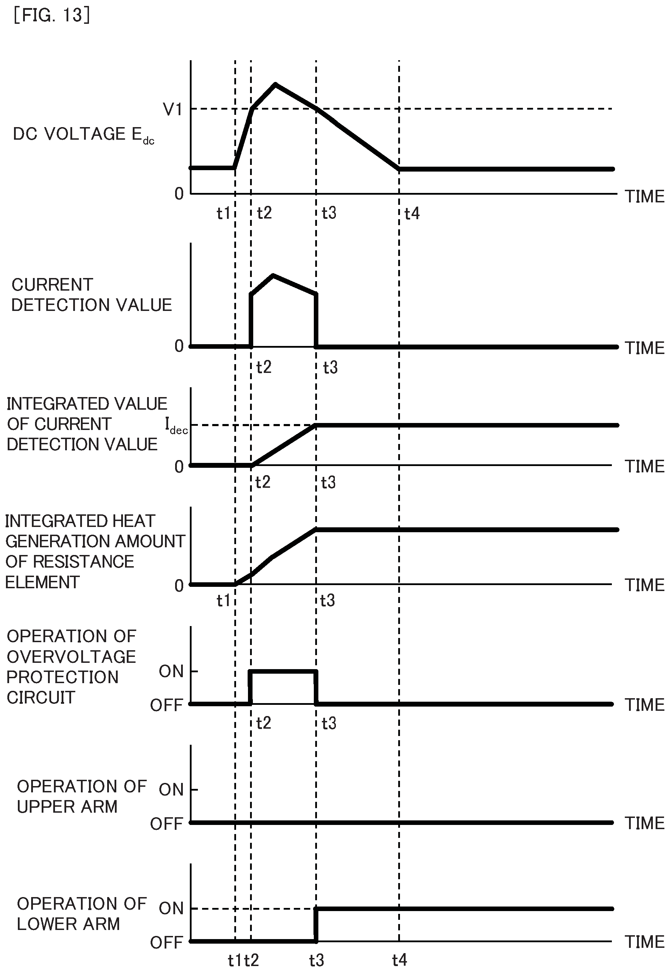

FIG. 13 is a time chart regarding an overvoltage protection control and a winding short-circuit control (see also FIG. 9 as appropriate).

Note that the vertical axis of the third time chart from the top of FIG. 13 is the integrated value of current detection values in the current detector 70. Regarding the vertical axis of the remaining time charts of FIG. 13, they are the same as those in FIG. 11, so description thereof will be omitted.

In the example of FIG. 13, while the overvoltage protection circuit 40 is in the ON state (time t2 to t3), current flows through the current detector 70, so moment-to-moment current detection values are greater than zero, and as a result, the integrated value of current detection values increases monotonically. Then, when the integrated value of current detection values reaches the predetermined value I_{dec} (S504 in FIG. 12: Yes), at time t3, the overvoltage protection circuit 40 is switched to the OFF state (S105) and the winding short-circuit control is started (S106).

### <Effects>

According to the fifth embodiment, the winding short-circuit control is started at a timing when the integrated value of current detection values reaches the predetermined value I_{dec}. Here, as the integrated value of current detection values is larger, the integrated heat generation amount of the resistance element 42 tends to be larger, and regenerative energy that has not been consumed tends to be smaller. Therefore, according to the fifth embodiment, the winding short-circuit control can be started at an even more appropriate timing than in the fourth embodiment.

### <<Sixth Embodiment>>

A sixth embodiment is different from the first embodiment in that the winding short-circuit control is started before the overvoltage protection control is finished. Note that others (configuration of power conversion device 100, etc.: see FIG. 1) are the same as those in the first embodiment. Therefore, parts different from those of the first embodiment will be described, and description of overlapping parts will be omitted.

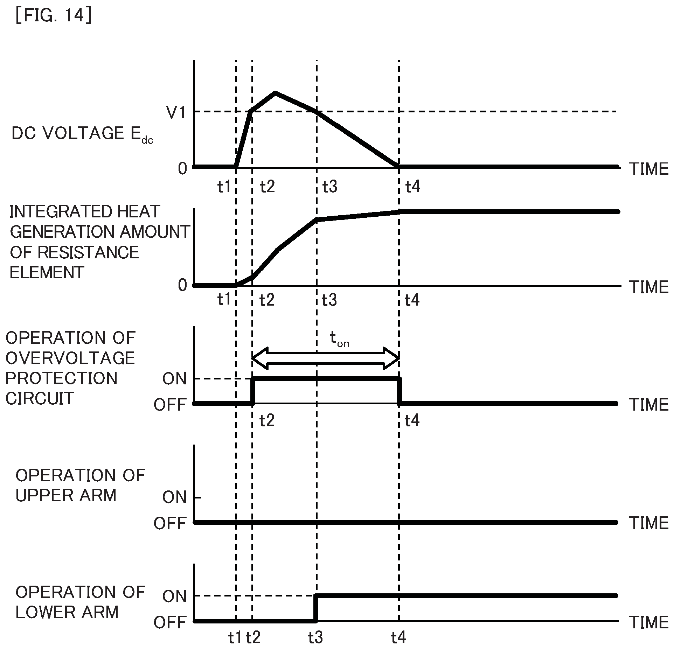

FIG. 14 is a time chart regarding an overvoltage protection control and a winding short-circuit control of a power conversion device according to the sixth embodiment (see also FIG. 1 as appropriate).

Note that the horizontal axis and vertical axis of each time chart in FIG. 14 are the same as those in FIG. 4, so description thereof will be omitted.

In the example of FIG. 14, the overvoltage protection circuit 40 is switched to an ON state at time t2 when the DC voltage E_{dc} reaches the predetermined value V1, and the ON state of the overvoltage protection circuit 40 is continued during a period of time t2 to t4 (that is, a period of the predetermined time tₒₙ). On the other hand, the lower arm switching elements S2, S4, and S6 are switched to an ON state at time t3. That is, the winding short-circuit control is started at time t3 before the timing (time t4) when the overvoltage protection control is finished.

### <Effects>

According to the sixth embodiment, since the winding short-circuit control is started before the overvoltage protection control is finished, execution times of the overvoltage protection control and the winding short-circuit control partially overlap. As a result, a reduction speed of the DC voltage E_{dc} of the smoothing capacitor 20 can be increased.

### <<Seventh Embodiment>>

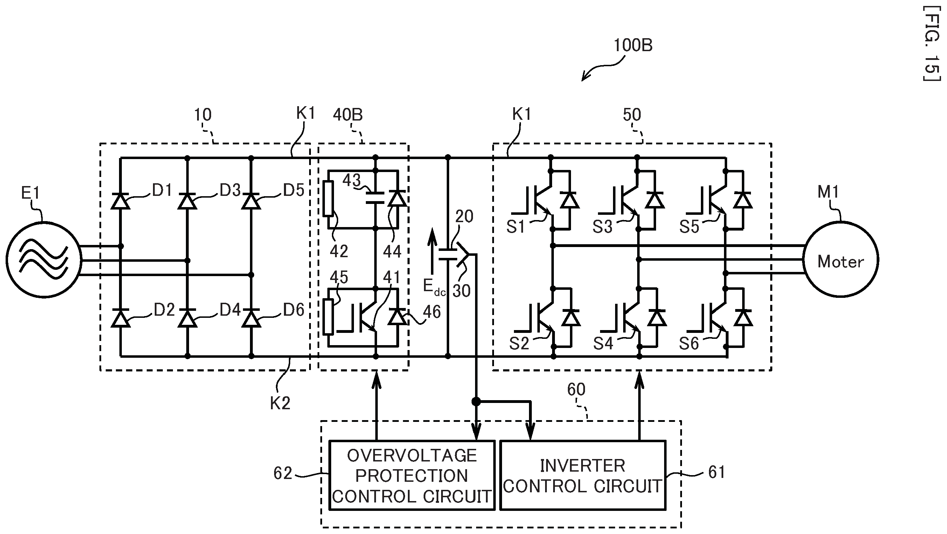

A seventh embodiment is different from the first embodiment in a configuration of an overvoltage protection circuit 40B (see FIG. 15), but others are the same as those in the first embodiment. Therefore, parts different from those of the first embodiment will be described, and description of overlapping parts will be omitted.

FIG. 15 is a configuration diagram of a power conversion device 100B according to the seventh embodiment.

As shown in FIG. 15, the overvoltage protection circuit 40B of the power conversion device 100B is provided with a first parallel connection body having a configuration in which a resistance element 42, a capacitor 43, and a diode 44 are connected in parallel. Furthermore, the overvoltage protection circuit 40B is provided with a second parallel connection body in which a switching element 41, a resistance element 45, and a diode 46 are connected in parallel. The above-mentioned first parallel connection body and second parallel connection body are connected in series. One end of this series connection body is connected to the positive-side DC line K1, and the other end is connected to the negative-side DC line K2.

The capacitor 43 shown in FIG. 15 is an element that stores electric charge when the switching element 41 is in an ON state, and is connected in parallel to the resistance element 42 and the like. As such a capacitor 43, for example, an electrolytic capacitor is used. Note that a circuit configuration as shown in FIG. 15 is also included in a matter that the overvoltage protection circuit 40B has a series connection body of the switching element 41 and the resistance element 42.

The diodes 44 and 46 are elements for forming a current path in a case where a reverse voltage is applied to the switching element 41. One diode 44 has a cathode connected to the positive-side DC line K1 and an anode connected to the negative-side DC line K2 via the second parallel connection body. The other diode 46 has an anode connected to the negative-side DC line K2 and a cathode connected to the positive-side DC line K1 via the first parallel connection body. The resistance element 45 is a high-impedance resistance for stabilizing a voltage applied to the switching element 41.

### <Effects>

According to the seventh embodiment, when the switching element 41 is switched to an ON state, electric power is stored in the capacitor 43, and then this electric power is consumed by the resistance element 42. Therefore, a sudden change in current flowing through the resistance element 42 can be suppressed, and also a temperature rise of the resistance element 42 can be suppressed. Further, by providing the diodes 44 and 46, a current path in a case where a reverse voltage is applied to the switching element 41 can be formed.

### <<Eighth Embodiment>>

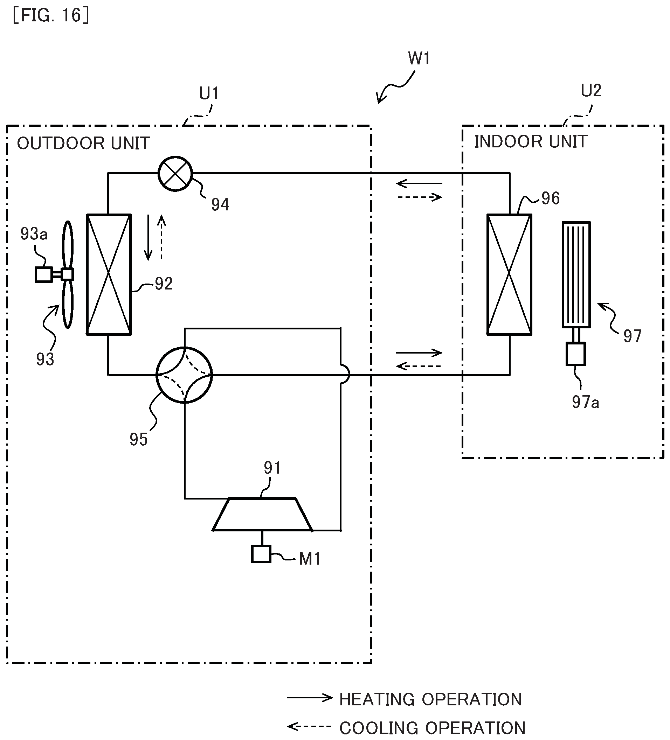

In an eighth embodiment, an air conditioner W1 (see FIG. 16) provided with the power conversion device 100 having the configuration described in the first embodiment (see FIG. 1) will be described. Note that configuration and processing contents of the power conversion device 100 are the same as those in the first embodiment, so description thereof will be omitted.

FIG. 16 is a configuration diagram of an air conditioner W1 according to the eighth embodiment.

Note that solid line arrows in FIG. 16 show a flow of refrigerant in a heating cycle.

Also, dashed line arrows in FIG. 16 show a flow of refrigerant in a cooling cycle.

The air conditioner W1 is a device that performs air conditioning such as cooling operation and heating operation. As shown in FIG. 16, the air conditioner W1 includes a compressor 91, an outdoor heat exchanger 92, an outdoor fan 93, an expansion valve 94, and a four-way valve 95 as components provided in an outdoor unit U1. Further, the air conditioner W1 includes an indoor heat exchanger 96 and an indoor fan 97 as components provided in an indoor unit U2.

Further, although not shown in FIG. 16, the air conditioner W1 is provided with a power conversion device 100 (see FIG. 1) having the same configuration as that of the first embodiment. The power conversion device 100 is mounted on a circuit board (not shown) of the outdoor unit U1.

The compressor 91 is a device that compresses low-temperature and low-pressure gas refrigerant and discharges it as high-temperature and high-pressure gas refrigerant. Note that although not shown in FIG. 16, an accumulator for gas-liquid separation of refrigerant is connected to a suction side of the compressor 91. Then, a motor M1, which is a drive source of the compressor 91, is connected to an output side of an inverter circuit 50 (see FIG. 1) of the power conversion device 100 (see FIG. 1).

The outdoor heat exchanger 92 is a heat exchanger in which heat exchange is performed between refrigerant flowing through its heat transfer tubes and outdoor air sent from the outdoor fan 93. The outdoor fan 93 is a fan that sends outdoor air to the outdoor heat exchanger 92. The outdoor fan 93 has an outdoor fan motor 93a as a drive source, and is installed in the vicinity of the outdoor heat exchanger 92.

The expansion valve 94 is a valve that reduces pressure of refrigerant condensed in a "condenser" (one of the outdoor heat exchanger 92 and the indoor heat exchanger 96). The refrigerant whose pressure is reduced by the expansion valve 94 is guided to an "evaporator" (the other of the outdoor heat exchanger 92 and the indoor heat exchanger 96).

The indoor heat exchanger 96 is a heat exchanger in which heat exchange is performed between refrigerant flowing through its heat transfer tubes (not shown) and indoor air (air in an air-conditioned room) sent from the indoor fan 97.

The indoor fan 97 is a fan that sends indoor air to the indoor heat exchanger 96. The indoor fan 97 includes an indoor fan motor 97a as a drive source, and is installed in the vicinity of the indoor heat exchanger 96.

The four-way valve 95 is a valve that switches a flow path of refrigerant according to an operation mode of the air conditioner W1. For example, during cooling operation (see dashed line arrows in FIG. 16), the refrigerant circulates through the compressor 91, the outdoor heat exchanger 92 (condenser), the expansion valve 94, and the indoor heat exchanger 96 (evaporator) sequentially. Further, during heating operation (see solid line arrows in FIG. 16), the refrigerant circulates through the compressor 91, the indoor heat exchanger 96 (condenser), the expansion valve 94, and the outdoor heat exchanger 92 (evaporator) sequentially. Then, air that has exchanged heat with the refrigerant flowing through the indoor heat exchanger 96 is blown out from the indoor unit U2 to the air-conditioned room.

### <Effects>

According to the eighth embodiment, since the air conditioner W1 is provided with the power conversion device 100 (see FIG. 1) having the same configuration as that of the first embodiment, the reliability of the air conditioner W1 is improved.

### <<Modification>>

The power conversion devices 100, 100A, 100B and the air conditioner W1 according to the present disclosure have been described in each embodiment above, but they are not limited to these descriptions, and various changes can be made.

For example, in the first embodiment (see FIG. 4), the case where the winding short-circuit control is started at the timing when the overvoltage protection control is finished has been described, but the invention is not limited to this. That is, the winding short-circuit control may be started after a predetermined time has elapsed from the time when the overvoltage protection control was finished. Note that the same can be said for the second to fifth embodiments.

Further, in each embodiment, a case where the overvoltage protection control circuit 62 (see FIG. 1) is configured by an analog electronic circuit including a comparator or a microcomputer has been described, but the invention is not limited to this. For example, the overvoltage protection control circuit 62 may be configured by combining a predetermined analog electronic circuit and a microcomputer.

Further, the configurations of the overvoltage protection circuits 40 and 40B (see FIG. 1 and FIG. 15) described in each embodiment are examples and are not limited thereto. That is, any other configuration may be used as long as the circuit has a function of protecting the smoothing capacitor 20 from an overvoltage.

Further, in each embodiment, a case where the AC power source E1 (see FIG. 1) is a three-phase AC power source has been described, but the invention is not limited to this, and a single-phase AC power source may be used.

Further, in each embodiment, a configuration in which a reactor is not particularly provided in the DC lines K1 and K2 (see FIG. 1) has been described, but the invention is not limited to this. That is, a reactor may be provided in at least one of the DC lines K1 and K2. For example, in the positive-side DC line K1, a reactor may be provided between a connection point of this DC line K1 and the smoothing capacitor 20 and the converter circuit 10 (the same applies to a reactor of the negative-side DC line K2).

Further, in each embodiment, a case where the number of smoothing capacitors 20 (see FIG. 1) is one has been described, but the invention is not limited to this. That is, a smoothing capacitor may be formed by a plurality of capacitors connected in series, parallel, or series-parallel. In this case, the "DC voltage of the smoothing capacitor" shall be a voltage across the smoothing capacitor (a DC voltage between the DC lines K1 and K2) in a case where the electrostatic capacities of the above-mentioned plurality of capacitors are combined and regarded as one smoothing capacitor. Note that the same can be said for the second to seventh embodiments.

Further, in the seventh embodiment, a configuration has been described in which the overvoltage protection circuit 40B (see FIG. 15) includes a first parallel connection body of the resistance element 42, the capacitor 43, and the diode 44, and a second parallel connection body of the switching element 41, the resistance element 45, and the diode 46, but the invention is not limited to this. That is, the switching element 41 may be connected in series to a parallel connection body of the resistance element 42 and the capacitor 43, and the remaining elements may be omitted as appropriate.

Further, each embodiment can be combined as appropriate. For example, any one of the first to fifth embodiments and the sixth embodiment (see FIG. 14) may be combined so that the winding short-circuit control is started before the overvoltage protection control is finished.

Further, any one of the first to sixth embodiments and the seventh embodiment (see FIG. 15) may be combined, and a configuration shown in FIG. 15 may be used as the overvoltage protection circuit 40B.
Further, any one of the first to seventh embodiments and the eighth embodiment (see FIG. 16) may be combined, and the motor M1 connected to the inverter circuit 50 may be used as a drive source of a compressor of an air conditioner.

Further, in the eighth embodiment (see FIG. 16), a configuration has been described in which the power conversion device 100 (see FIG. 1) is connected to the motor M1 of the compressor 91, but the invention is not limited to this. For example, the power conversion device 100 may be connected to the outdoor fan motor 93a (see FIG. 16). Further, the power conversion device 100 may be connected to the motor M1 of the compressor 91, and the power conversion device 100 may also be connected to the outdoor fan motor 93a.

Further, in the eighth embodiment (see FIG. 16), a configuration has been described in which the air conditioner W1 is provided with the four-way valve 95, but the invention is not limited to this. That is, the four-way valve 95 may be omitted as appropriate to provide an air conditioner exclusively for cooling or exclusively for heating.

Further, the eighth embodiment (see FIG. 16) can be applied to various types of air conditioners such as business-use air conditioners and multi-air conditioners for buildings, in addition to room air conditioners. Further, the eighth embodiment can also be applied to other devices such as a water heater, a refrigerator, and an air-conditioning water heater.

Further, each embodiment is described in detail to explain the present disclosure in an easy-to-understand manner, and is not necessarily limited to one provided with all configurations described. Further, for a part of the configuration of each embodiment, addition, deletion, or replacement of another configuration can be made.

Further, the above-mentioned mechanisms and configurations show what is considered necessary for explanation, and do not necessarily show all mechanisms and configurations on a product.

### Explanation of Reference Signs

10 converter circuit
20 smoothing capacitor
30 DC voltage detector
40, 40B overvoltage protection circuit
41 switching element
42 resistance element
43 capacitor
50 inverter circuit
60 controller
61 inverter control circuit
62 overvoltage protection control circuit
91 compressor
92 outdoor heat exchanger
93 outdoor fan
94 expansion valve
95 four-way valve
96 indoor heat exchanger
97 indoor fan
100, 100A, 100B power conversion device
E1 AC power source
M1 motor
S1, S3, S5 switching element (upper arm)
S2, S4, S6 switching element (lower arm)
W1 air conditioner

## Claims

1. A power conversion device comprising:
a converter circuit that converts an AC voltage applied from an AC power source into a DC voltage;
a smoothing capacitor that smooths the DC voltage on an output side of the converter circuit;
an inverter circuit that converts the DC voltage of the smoothing capacitor into an AC voltage and applies the AC voltage to a motor;
an inverter control circuit that controls the inverter circuit;
an overvoltage protection circuit having a series connection body of a switching element and a resistance element and being connected in parallel to the smoothing capacitor; and
an overvoltage protection control circuit that performs an overvoltage protection control for switching the switching element to an ON state when the DC voltage of the smoothing capacitor reaches a predetermined value after the inverter circuit is stopped, wherein
the inverter control circuit performs a winding short-circuit control for turning one of an upper arm and a lower arm of the inverter circuit to an all-phase ON state while turning the other to an all-phase OFF state after the overvoltage protection control is started, and
the winding short-circuit control is started based on a predetermined state quantity having a correlation with an integrated heat generation amount of the resistance element associated with the overvoltage protection control.

2. The power conversion device according to claim 1, wherein
the predetermined state quantity is an elapsed time from the start of the overvoltage protection control.

3. The power conversion device according to claim 1, wherein
the predetermined state quantity is a reduction amount from a peak value in a case where a change in the DC voltage changes from an increase to the peak value and turns to a decrease after the overvoltage protection control is started.

4. The power conversion device according to claim 1, wherein
the predetermined state quantity is an integrated value of a reduction amount from a peak value in a case where a change in the DC voltage changes from an increase to the peak value and turns to a decrease after the overvoltage protection control is started.

5. The power conversion device according to claim 1, wherein
the predetermined state quantity is a magnitude of a current flowing through the resistance element after the overvoltage protection control is started.

6. The power conversion device according to claim 1, wherein
the predetermined state quantity is an integrated value of a current flowing through the resistance element after the overvoltage protection control is started.

7. The power conversion device according to any one of claims 1 to 6, wherein
the inverter control circuit makes a threshold of the predetermined state quantity, which is a criterion for determining whether to start the winding short-circuit control, larger as a rotational speed of the motor when the inverter circuit is stopped is higher.

8. The power conversion device according to any one of claims 1 to 6, wherein
the winding short-circuit control is started before the overvoltage protection control is finished.

9. The power conversion device according to any one of claims 1 to 6, wherein
the overvoltage protection circuit has a capacitor connected in parallel to the resistance element.

10. An air conditioner comprising the power conversion device according to any one of claims 1 to 6, and further comprising:
a compressor;
an outdoor heat exchanger;
an expansion valve; and
an indoor heat exchanger, wherein
the motor is a drive source of the compressor.
